# EUROPÄISCHE PATENTSCHRIFT

(11) **EP 0 314 022 B1**
(45) Veröffentlichungstag und Bekanntmachung des Hinweises auf die Patenterteilung: **28.07.1993**
(21) Anmeldenummer: 88117623.4
(22) Anmeldetag: 22.10.1988
(51) Int. Cl.: A61C 3/02, B24C 7/00

(54) **Verfahren und Vorrichtung zum Bewegen granulatartiger Hilfsmittel zur Behandlung von Zahnersatz**
Method and device for moving granular means for dental prosthesis treatment
Procédé et dispositif pour mouvair des moyens granuliformes pour le traitement de prothèses dentaires

(30) Priorität: 27.01.1988 DE 3802251; 30.10.1987 DE 3736972
(43) Veröffentlichungstag der Anmeldung: 03.05.1989
(73) Patentinhaber: RENFERT GmbH, D-78245 Hilzingen (DE)
(72) Erfinder: Rieger, Klaus-Ulfert, D-7709 Hilzingen (DE); Rieger, Sören, Dr., D-7709 Hilzingen (DE); Barkei, Bernt, D-7709 Hilzingen (DE)
(74) Vertreter: Hiebsch, Gerhard F., Dipl.-Ing.

(56) Entgegenhaltungen:
- DE-A- 2 133 519
- DE-A- 3 212 207
- DE-B- 1 268 514
- GB-A- 2 148 829
- US-A- 3 858 360

## Beschreibung

Die Erfindung betrifft eine Vorrichtung zum Bewegen eines granulatartigen Hilfsmittels zur Behandlung von Zahnersatz nach dem Oberbegriff der Patentansprüche 1 bzw. 2. Zudem erfaßt die Erfindung ein Verfahren zum Bewegen eines solchen granulatartigen Hilfsmittels mittels dieser Vorrichtung, bei dem das Granulat mit Druckluft vermischt und in einem Gemischstrahl dem Zahnersatz zugeführt wird.

In Zahnlaboratorien ist es häufig erforderlich, für geringe Mengen sehr feinkörniger granulatartiger Hilfsmittel -- wie Keramikpartikel, Quarzkörner od. dgl. -- an den entstehenden Zahnersatz mit einem gewissen Druck heranzuführen.

Die US-A-3 858 360 beschreibt ein Gehäuse mit einer Arbeitskammer, die mit einer Saugkammer über eine gelochte Trennwand in Verbindung steht, um Schleifabfall zu beseitigen, der bei einem Bearbeitungsvorgang in der Arbeitskammer entsteht. Außerdem ist eine Steuerkammer von der Arbeitskammer und der Saugkammer durch eine Isolierwandung abgeschirmt und nimmt zwei Schleifmittelbehälter auf; da das Gerät vor allem für Dentallabors gedacht ist, sind zwei unterschiedliche Schleifmittel vorgesehen, nämlich zum einen für die Bearbeitung von Gold und zum anderen für Porzellan.

Jedem Schleifmittelbehälter wird seitlich in Bodennähe Druckluft zugeführt und dort in das granulatartige Schleifmittel geblasen; das so entstehende Gemisch wird durch ein Vertikalrohr mit -- über dem Niveau des Drucklufteinlasses liegenden -- seitlichen Einzugsöffnungen nach unten hin ausgetragen und gelangt in eine Schlauchleitung sowie durch diese zu einem Düsengriffel.

Der Granulatbehälter kann mit einer Drosseleinrichtung entlüftet werden, in der eine luftdurchlässige und bezüglich des Schleifmittels undurchlässige Scheibe vorgesehen ist. Soll der Schleifmittelbehälter entlüftet werden, so stellt man einen Wahlschalter auf "Entlüftung", wodurch die Druckluftzufuhr zum Granulatbehälter abgestellt und die Entlüftungsleitung über jenen Wahlschalter mit der Außenluft verbunden wird.

Die GB-A-2 148 849 offenbart die Behanldung von Werkstücken mit Aluminiumoxid oder Siliziumkarbid als Schleifmittel, das einem Druckluftstrom gesteuert zugemessen wird. Ein Schleifmittelsilo wird über ein das Schleifmittel durchsetzende und über diesem endendes geneigtes Steigrohr mit Druckluft beaufschlagt, durch diese unter Druck gesetzt sowie am Boden durch eine Förderöffnung einem querenden Druckluftstrom zugeführt. Der Förderöffnung ist eine ihr gegenüber verstellbare Drosselnadel zugeordnet, die einen einstellbaren Querschnitt definiert. Diese Vorrichtung enthält noch eine Vibrationseinrichtung aus einem von einem kreisförmigen Druckluftstrom verwirbelten Ball, der im Unterteil des Silos und außerhalb des Siloraumes angeordnet ist.

In Kenntnis dieses Standes der Technik hat sich der Erfinder das Ziel gesetzt, eine Vorrichtung sowie ein Verfahren zu schaffen, welche bei hoher Betriebssicherheit und geringem Kostenaufwand effektiv arbeiten können sowie eine Fluidisierung und Dosierung des granulatartigen Hilfsmittels begünstigen.

Zur Lösung dieser Aufgabe führen die Lehren der unabhängigen Patentansprüche.

In einem Falle liegt das Steigrohr an einem Tragsockel fest, den ein Luftdurchgang quer durchsetzt, an den das Steigrohr angeschlossen ist und den ein in ihm mündendes Dosierrohr in einen Luftzuführbereich und einen Luftabführbereich teilt, wobei der Luftzuführbereich eine Wirbeldüse aufweist. Durch die somit bestimmte Art der Zuführung der Druckluft bzw. Arbeitsluft ist es möglich, mittels der Druckluft das Granulat zu fluidisieren und dann das fließende Gemisch mit dieser Druckluft abzufördern. Bei einem anderen Lösungsweg wird in das Haufwerk zur Fluidisierung ein Strom aus Steuerluft eingeführt, während die Abförderung durch die dem Behälter erst nachgeordnet eingebrachte Arbeitsluft erfolgt. Auch hierzu liegt das an eine Luftführung angeschlossene Steigrohr am Tragsockel fest, der ein an eine Luftleitung angeschlossenes Dosierrohr aufweist, in die in Strömungsrichtung nach dem Dosierrohr ein Zuführkanal für Förderluft mündet; vom Tragsockel ragt zudem eine an eine Luftzuführung angeschlossene Wirbeldüse auf.

Weitere vorteilhafte Ausgestaltungen der Vorrichtung sind den Unteransprüchen zu entnehmen.

Das erfindungsgemäße Verfahren zeichnet sich im übrigen dadurch aus, daß dem granulatartigen Hilfsmittel -- vor seiner Vermischung mit der Druckluft -- der Strom einer Steuerluft zugeführt sowie das Hilfsmittel mit dieser fluidisiert wird.

Bei beiden Ausführungen der erfindungsgemäßen Vorrichrtung kann das Steigrohr in Strömungsrichtung nach dem Dosierrohr an die Luftleitung angeschlossen sein.

Der Tragsockel ist eine Werkstoffscheibe und luftdicht an den davon aufragenden Behälter sowie die Luftzuführung angeschlossen.

Diese Werkstoffscheibe durchsetzt quer zur Behältermittelachse ein Luftkanal, der vom Umfang der Werkstoffscheibe zur Behältermittelachse hin abnehmend gestuft ist; zwei außenliegende Sackbohrungen sind miteinander im Inneren der Werkstoffscheibe durch eine enge Bohrung und einen zwischen dieser und der einen Sackbohrung verlaufenden koaxialen Kanal größeren Durchmessers verbunden.

Erfindungsgemäß verläuft von der dem Lufteintritt nächstliegenden Sackbohrung zur Oberfläche des Tragsockels eine Ausnehmung, in welche die Wirbeldüse eingesetzt ist; diese besteht aus einem Rohr verhältnismäßig weiten Innenraumes mit seitlichen engen Düsenlöchern, durch welche die Luft in das Hilfsmittel eintritt. Im Inneren der Wirbeldüse ist ein Filterelement angebracht, um ein Verschmutzen der Luftwege hintanhalten zu helfen.

Von der dem Lufteintritt fernen Sackbohrung geht etwa rechtwinklig ein an das Steigrohr anschließender Seitenarm aus und parallel zu diesem vom Kanal eine die Dosierdüse aufnehmende Ausnehmung.

Die freie Länge des Steigrohres ist größer als die 10fache freie Länge von Wirbeldüse und/oder Dosierdüse, die beide -- wie gesagt -- nahe der Oberfläche des Tragsockels enden, um auch geringe Füllstandhöhen zu erfassen. Der Durchmesser des Steigrohres entspricht etwa der halben freien Länge der Dosierdüse. Diese ist ein Rohr mit wenigstens einer dem freien Ende nahen und beidends offenen radialen Querbohrung, deren Durchmesser bevorzugt zwischen 1 und 2,5 mm liegt, wodurch Körnungen zwischen 25.10⁻⁶m und 250.10⁻⁶m ohne weiteres transportiert zu werden vermögen. Die beiden Düsen -- oder deren mehrere -- enden im geringen Abstand über der Oberfläche des Tragsockels, so daß auch bei geringster Füllstandhöhe noch ein Abfördern des granulatartigen Hilfsmittels möglich ist. Demgegenüber ragt jenes Steigrohr bis kurz unter die Decke des Behälters und führt dort Luft zu, um Unterdruck nicht entstehen zu lassen. Andernends ist das Steigrohr an die Luftführung angeschlossen.
Bei der Ausführung mit Arbeitslufteinspeisung nach dem Behälter hat es sich als günstig erwiesen, in die dem Lufteintritt für Steuerluft ferne Sackbohrung ein Schlauchanschlußrohr für die Ableitung einzusetzen und das Schlauchanschlußrohr mit einem Eingang für die Arbeitsluft zu versehen; in das Schlauchanschlußrohr ist ein dessen Wandung durchsetzendes Einschraubstück eingefügt sowie an diesem eine Schraubbüchse mit luftdurchsetzter Schraubkappe angeordnet.

Es hat sich gezeigt, daß bei großen Korngrößen des Hilfsmittels für die dentale Praxis die Wirbeldüse außer Einsatz bleiben kann, also zur Abförderung lediglich die Dosierdüse und das Steigrohr von Bedeutung sind.

Mit der erfindungsgemäßen Vorrichtung, welche leicht und problemlos handhabbar ist, kann ohne weiteres auch auf größere Entfernungen das beschriebene granulatartige Hilfsmittel dem Laborplatz des Zahntechnikers zugeführt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine teilweise geschnittene Seitenansicht einer Vorrichtung;
- Fig. 2:: einen gegenüber Fig. 1 vergrößerten Längsschnitt durch einen Teil der Vorrichtung;
- Fig. 3 bis 5:: (Teil-) Längsschnitte durch Teile der Fig. 1,2;
- Fig. 6:: die teilweise geschnittene Draufsicht auf eine besondere Ausgestaltung der Vorrichtung;
- Fig. 7:: einen Teillängsschnitt durch Fig. 6 nach deren Linie VII - VII.

Die im gewählten Ausführungsbeispiel in einem Winkel von etwa 2° konisch nach oben verlaufende, nahezu zylindrische Wandung eines Kunststoff- oder Leichtmetallbehälters 10 für granulatartige Hilfsmittel der Dentalpraxis weist eine obere Abdeckung 11 auf und ist mittels eines Kragens 12 an einem Gewindestutzen 14 eines Tragsockels 16 festgeschraubt.

Der Tragsockel 16 ist als Scheibe aus Leichtmetall oder Kunststoff eines Durchmessers d von etwa 50 mm und einer Höhe h von beispielsweise 35 mm ausgebildet; jener Gewindestutzen 14 ragt von einer Sockelringfläche 18 in einer Höhe i von etwa 7,5 mm auf.

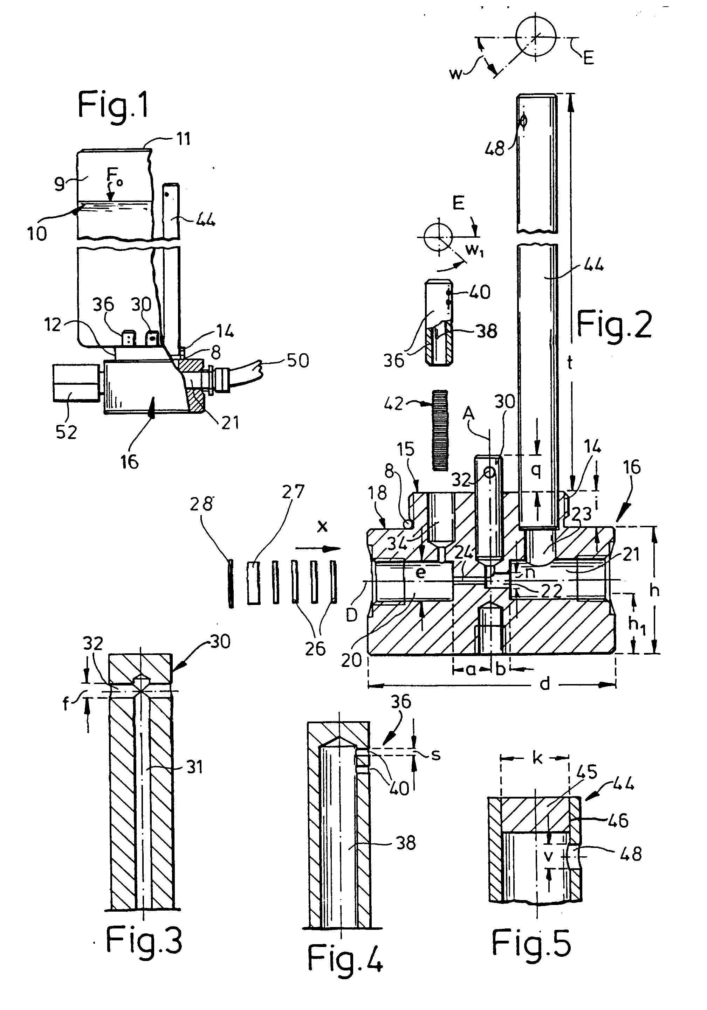

In Fig. 2 sind geringfügig oberhalb einer von der halben Sockelhöhe h₁ bestimmten Ebene in einem Durchmesser D des Tragsockels 16 zwei einander gegenüberliegende Sackbohrungen 20,21 eines Durchmessers e von hier 8,5 mm angebracht und enden in unterschiedlichen Abständen a,b (7,25 mm bzw. 3,75 mm) von der Behältermittelachse A. Von der Sackbohrung 21 reicht ein koaxialer Kanal 22 eines Durchmessers n von 3 mm etwas über jene Behältermittelachse A hinaus und ist durch eine Bohrung 24 etwa halben Durchmessers n mit der anderen Sackbohrung 20 verbunden.

Bei 26 sind dünne Filtereinsätze für die Sackbohrung 20 angedeutet, bei 27 dicke Filtereinsätze, denen ein Sieb 28 zugeordnet ist.

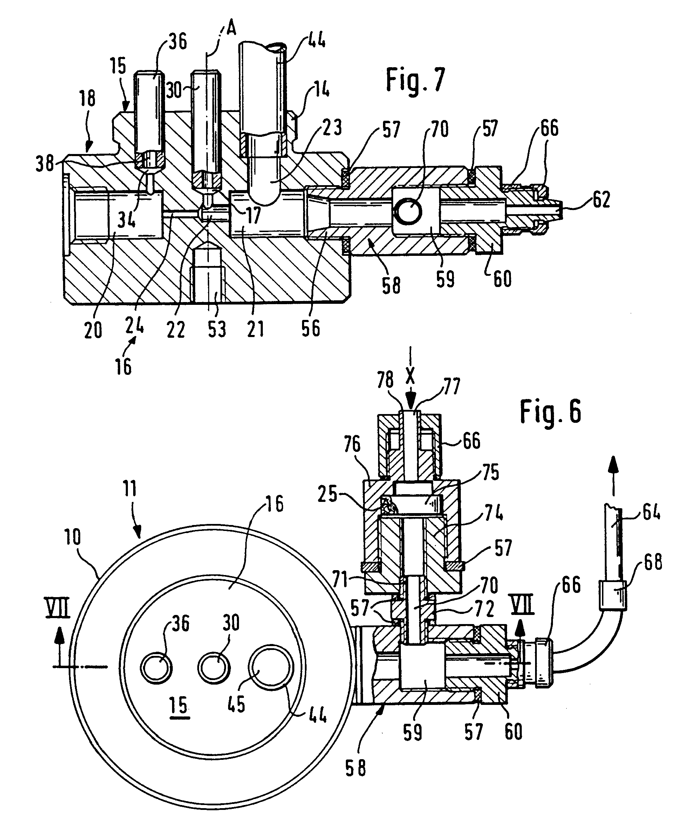

In der Behältermittelachse A verläuft eine Einformung 17 (Fig. 7) des Tragsockels 16, die ein Zentralrohr als Dosierdüse 30 mit einer T-förmigen Bohrung 31,32 aufnimmt. Der Durchmesser f der beidseits der Dosierdüse 30 mündenden Querbohrung 32 beträgt im gewählten Ausführungsbeispiel 1,2 mm. Diese Dosierdüse 30 ragt etwa 10 mm (Maß q) von der Oberfläche 15 des Gewindestutzens 14 auf.

In einer achsparallelen zylindrischen Ausnehmung 34 des Tragsockels 16, die an die in Fig. 2 linke Sackbohrung 20 angeschlossen ist, sitzt eine rohrförmige Wirbeldüse 36, von deren Achskanal 38 zwei enge Düsenlöcher 40 -- jeweils eines Durchmessers s von hier 0,5 mm -- parallel zueinander ausgehen. In jenem Achskanal 38 sitzt ein in Fig. 2 dargestellter Filtereinsatz 42.

Auf der anderen Seite der Dosierdüse 30 erstreckt sich ein zu ihr paralleles Steigrohr 44 einer freien Höhe t von etwa 140 mm. Dieses Steigrohr 44 ist nach unten hin an einen Seitenarm 23 der Sackbohrung 21 angeschlossen, also mit letzterer verbunden.

Während die beiden Düsenrohre 30, 36 aus jeweils einem ausgebohrten Buntmetallstab bestehen, ist das Steigrohr 44 bevorzugt aus einer Aluminiumlegierung stranggepreßt mit einem verhältnismäßig großen Innendurchmesser k von etwa 6 mm. Das Kopfende des Steigrohres 44 ist durch eine Werkstoffscheibe 45 verschlossen, die bei 46 mit dem Steigrohr 44 verklebt ist. In diesem ist ein wenig unterhalb der Werkstoffscheibe 45 ein seitliches Loch 48 eines Durchmessers v von etwas mehr als 2 mm vorgesehen.

In Fig. 2 ist oberhalb des Steigrohres 44 angedeutet, daß jenes Loch 48 in einem Winkel w von etwa 45° zu einer gedachten Mittelebene E steht. Auch die Düsenlöcher 40 sind in einem solchen Winkel w₁ zur Ebene E gestellt, wobei beide Winkel w, w₁ zueinander gerichtet sind. Die Querbohrung 32 der Dosierdüse 30 verläuft senkrecht zu jener Ebene E.

Der Behälter 11 ist für den Einsatz im Dentallabor beispielsweise mit einem Quarzgranulat Q einer Korngröße von 25.10⁻⁶m bis 50.10⁻⁶m gefüllt, ein möglicher oberer Füllstand im Behälterinnenraum 7 ist in Fig. 1 mit F₀ bezeichnet. Bei Eintritt von Druckluft als Arbeitsluft (Pfeil x) in die Sackbohrung 20 beginnt dank der Wirbeldüse 36 eine Fluidisierung des Granulates Q, welches durch die Querbohrung 32 und die Axialbohrung 31 der Dosierdüse 30 in den Kanal 22 und aus diesem in die Sackbohrung 21 gelangt. An diese ist in Fig. 1 ein Transportschlauch 50 für das Luft/Granulat-Gemisch angeschlossen. Der gegenüberliegende Luftanschluß ist dort mit 52 bezeichnet.

Dank des in den Behälterkopfraum 9 reichenden Steigrohres 44 ist die Belüftung des Kopfraumes 9 ohne weiteres möglich, so daß ein den Abtransport des Granulates Q behindernder Unterdruck im Kopfraum 9 nicht entstehen kann.

Durch die Filter 42,26,27 wird ein Verschmutzen oder Verstopfen der Luftzufuhrteile 52, 38 verhindert.

Ein im Tragsockel 16 vorgesehenes Gewindeloch 53 dient zur Befestigung der Vorrichtung an einer aus Gründen der Uebersichtlichkeit nicht dargestellten Halteplatte od. dgl.

Die gesamte Vorrichtung ist dicht verschlossen -- beispielsweise ist zwischen Behälter 11 und Tragsockel 16 ein O-Ring 8 angeordnet --, so daß in einfacher Weise bei gefahrloser Handhabung eine Druckförderung des Granulates Q zu dem zu behandelnden Zahnersatz od. dgl. ohne weiteres möglich ist.

Bei einem nicht dargestellten Ausführungsbeispiel für Granulate Q größerer Körnung (beispielsweise 100.10⁻⁶m bis 250.10⁻⁶m) ist die Wirbeldüse 36 nicht in Tätigkeit; die Druckluft gelangt -- wie auch beim geschilderten Ausführungs beispiel -- aus der Sackbohrung 20 über die koaxiale Bohrung 24 in den Kanal 22, wobei GranulatQ durch die Querbohrungen 32 der Dosierdüse 30 eingezogen und der Sackbohrung 21 zugeleitet wird.

Bei der erfindungsgemäßen Ausführung nach Fig. 6,7 ist in das Sackloch 21 der Schraubstutzen 56 eines -- unter Zwischenschaltung einer Dichtungsscheibe 57 -- anliegenden Schlauchanschlußrohres 58 eingesetzt. Dessen Innenraum 59 ist durch eine ihrerseits eingeschraubte Verschlußmutter 60 andernends verschlossen und letztere mit einem koaxialen Mundstück 62 zum Anschluß einer flexiblen Leitung 64 ausgerüstet. Diese wird von einer Ueberwurfmutter 66 gehalten und weist bei 68 ein Quetschventil auf.

Quer zum Durchmesser D des Tragsockels 16 mündet in den Innenraum 59 des Schlauchanschlußrohres 58 die Bohrung 70 eines rohrartigen Einschraubstückes 71 mit mutterartigem Mittelkragen 72. Dieses ist andernends in eine Schraubbüchse 74 eingesetzt, die -- unter Bildung eines Aufnahmesraumes 75 für Filtereinsätze 25 -- eine Schraubkappe 76 trägt. In deren Aufnahmeraum 75 mündet eine Axialbohrung 77 eines angeformten Schlauchanschlußendes 78. Auch diesem ist eine Ueberwurfmutter 66 zugeordnet.

Bei dieser Ausführung wird durch den Luftanschluß 52 Steuerluft eingeblasen, wohingegen die erforderliche Förder- oder Arbeitsluft durch die Bohrung 70 eingebettet wird; das Mischen der Arbeitsluft und dem Granulat erfolgt hier im Innenraum 59 des Schlauchanschlußrohres 58. Dank des Quetschventils 68 ist ohne weiteres eine Unterbrechung des Förderstromes möglich.

## Patentansprüche

1. Vorrichtung zum Bewegen eines granulatartigen Hilfsmittels zur Behandlung von Zahnersatz, bei der das Granulat mit Druckluft vermischt und in einem Gemischstrahl dem Zahnersatz zuführbar ist, wobei in den Kopfraum (9) eines Behälters (10) für das Granulat (Q) wenigstens ein Steigrohr (44) mit zumindest einem im Kopfraum (9) vorgesehenen Loch (48) ragt,
dadurch gekennzeichnet,
daß das Steigrohr (44) an einem Tragsockel (16) festliegt, den ein Luftdurchgang (20,21,22,24) quer durchsetzt, an den das Steigrohr (44) angeschlossen ist und den ein in ihm mündendes, in den Behälter (10) ragendes Dosierrohr (30) in einen Luftzuführbereich und einen Luftabführbereich teilt, wobei der Luftzuführbereich eine, in den Behälter (10) ragende Wirbeldüse (36) aufweist.

2. Vorrichtung zum Bewegen eines granulatartigen Hilfsmittels zur Behandlung von Zahnersatz, bei der das Granulat mit Druckluft vermischt und in einem Gemischstrahl dem Zahnersatz zuführbar ist, wobei in den Kopfraum (9) eines Behälters (10) für das Granulat (Q) wenigstens ein Steigrohr (44) mit zumindest einem im Kopfraum (9) vorgesehenen Loch (48) ragt, dadurch gekennzeichnet, daß das an eine Luftführung angeschlossene Steigrohr (44) an einem Tragsockel (16) festliegt, der ein an eine Luftleitung (21,22) angeschlossenes, in den Behälter (10) ragendes Dosierrohr (30) aufweist, in die in Strömungsrichtung nach dem Dosierrohr (30) ein Zuführkanal (70) für Förderluft mündet, wobei vom Tragsockel (16) eine an eine Luftzuführung (20,24) angeschlossene, in den Behälter (10) ragende Wirbeldüse (36) aufragt.

3. Vorrichtung nach Anspruch 1 oder 2, dadurch gekennzeichnet, daß das Steigrohr (44) in Strömungsrichtung nach dem Dosierrohr (30) an die Luftleitung (21) angeschlossen ist.

4. Vorrichtung nach einem der Ansprüche 1 bis 3, dadurch gekennzeichnet, daß der Luftdurchgang (20,21,22,24) zur Behältermittelachse (A) hin abnehmend gestuft ist.

5. Vorrichtung nach einem der Ansprüche 1 bis 4, dadurch gekennzeichnet, daß zwei außenliegende Sackbohrungen (20,21) vorgesehen sind, deren dem Lufteintritt (52) nächstliegende durch eine enge Bohrung (24) an einen koaxialen Kanal (22) größeren Durchmessers (n) angeschlossen ist, der vom Boden der anderen Sackbohrung (21) ausgeht.

6. Vorrichtung nach einem der Ansprüche 1 bis 5, dadurch gekennzeichnet, daß vom Kanal (22) etwa rechtwinklig eine das Dosierrohr (30) aufnehmende Einformung (17) ausgeht.

7. Vorrichtung nach einem der Ansprüche 1 bis 6, dadurch gekennzeichnet, daß das Dosierrohr (30) eine Dosierdüse mit wenigstens einer dem freien Ende nahen und beidends offenen radialen Querbohrung (32) ist, wobei gegebenenfalls ein Durchmesser (f) der Querbohrung von 1 bis 2,5 mm vorgesehen ist.

8. Vorrichtung nach wenigstens einem der Ansprüche 1 bis 7, dadurch gekennzeichnet, daß von der dem Lufteintritt (52) nächstliegenden Sackbohrung (20) zur Oberfläche (15) des Tragsockels (16) eine Ausnehmung (34) zur Aufnahme der Wirbeldüse (36) verläuft, und/oder daß von der dem Lufteintritt (52) fernen Sackbohrung (21) etwa rechtwinklig ein das Steigrohr (44) anschließender Seitenarm (23) ausgeht.

9. Vorrichtung nach wenigstens einem der Ansprüche 1 bis 8, dadurch gekennzeichnet, daß die freie Länge (t) des Steigrohres (44) größer ist als die zehnfache freie Länge (q) von Wirbeldüse (36) bzw. Dosierrohr (30) und/oder daß der Durchmesser (k) des Steigrohres (44) etwa der halben freien Länge (q) des Dosierrohres (30) entspricht.

10. Vorrichtung nach wenigstens einem der Ansprüche 1 bis 9, dadurch gekennzeichnet, daß die Wirbeldüse (36) einen weiten Achskanal (38) von bevorzugt 3 bis 4 mm Durchmesser aufweist und nahe ihres freien Endes mit wenigstens einem etwa nadeldicken Düsenloch (40) versehen ist, wobei gegebenenfalls im Achskanal (38) der Wirbeldüse (36) wenigstens eine Filtereinrichtung (42) angeordnet ist.

11. Vorrichtung nach wenigstens einem der Ansprüche 1 bis 10, dadurch gekennzeichnet, daß ein endwärtiges seitliches Loch (48) des Steigrohres (44) und/oder das Düsenloch (40) der Wirbeldüse (36) zur Querbohrung (32) der Dosierdüse (30) in einem Winkel (w) verlaufen/verläuft, wobei der Winkel (w) bevorzugt etwa 45° beträgt.

12. Vorrichtung nach wenigstens einem der Ansprüche 2 bis 11, dadurch gekennzeichnet, daß in die dem Lufteintritt (52) für Steuerluft ferne Sackbohrung (21) ein Schlauchanschlußrohr (58) für die Ableitung (64) eingesetzt und das Schlauchanschlußrohr mit einem Eingang (Bohrung 70) für die Arbeitsluft versehen ist, wobei gegebenenfalls in das Schlauchanschlußrohr (58) radial ein dessen Wandung durchsetzendes Einschraubstück (71) eingefügt sowie an diesem eine Schraubbüchse (74) mit luftdurchsetzter Schraubkappe (76) angeordnet ist.

13. Vorrichtung nach wenigstens einem der Ansprüche 1 bis 12, dadurch gekennzeichnet, daß in dem Lufteintritt (52;77,70) wenigstens ein Filter (25,26,27) angeordnet ist, wobei gegebenenfalls in das Schlauchanschlußrohr (58) radial ein dessen Wandung durchsetzendes Einschraubstück (71) eingefügt sowie an diesem eine Schraubbüchse (74) mit luftdurchsetzter Schraubkappe (76) angeordnet ist.

14. Verfahren zum Bewegen eines granulatartigen Hilfsmittels zur Behandlung von Zahnersatz, mittels einer Vorrichtung nach zumindest einem der voranstehenden Ansprüche, bei dem das Granulat mit Druckluft vermischt und in einem Gemischstrahl dem Zahnersatz zugeführt wird, dadurch gekennzeichnet, daß dem granulatartigen Hilfsmittel, vor seiner Vermischung mit der Druckluft, der Strom einer Steuerluft zugeführt sowie das Hilfsmittel mit dieser fluidisiert wird.

## Claims

1. Device for moving granular means for dental prosthesis treatment, in which the granular material is mixed with compressed air and can be fed to the dental prosthesis in a mixed jet, at least one riser (44) projecting into the headspace (9) of a container (10) for the granular material (Q) and having at least one hole (48) provided in the headspace (9), characterised in that the riser (44) is fixed to a supporting socket (16) which is traversed by an air passage (20, 21, 22, 24) to which the riser (44) is connected and which is divided into an air inlet region and an air outlet region by a metering pipe (30) leading into it and projecting into the container (10), the air inlet region having a swirl nozzle (36) projecting into the container (10).

2. Device for moving granular means for dental prosthesis treatment, in which the granular material is mixed with compressed air and can be fed to the dental prosthesis in a mixed jet, at least one riser (44) projecting into the headspace (9) of a container (10) for the granular material (Q) and having at least one hole (48) provided in the headspace (9), characterised in that the riser (44) connected to an air duct is fixed to a supporting socket (16) which has a metering pipe (30) connected to an air line (21, 22) and projecting into the container (10), into which a supply channel (70) for conveying air leads in the flow direction downstream of the metering pipe (30), a swirl nozzle (36) connected to an air duct (20, 24) and projecting into the container (10) projecting from the supporting socket (16).

3. Device according to claim 1 or claim 2, characterised in that the riser (44) is connected to the air line (21) in the flow direction downstream of the metering pipe (30).

4. Device according to one of claims 1 to 3, characterised in that the air passage (20, 21, 22, 24) is stepped so that it decreases towards the central axis (A) of the container.

5. Device according to one of claims 1 to 4, characterised in that two external blind bores (20, 21) are provided, the one nearest to the air inlet (52) being connected by a narrow bore (24) to a coaxial channel (22) of larger diameter (n) which departs from the bottom of the other blind bore (21).

6. Device according to one of claims 1 to 5, characterised in that a recess (17) receiving the metering pipe (30) departs in a substantially perpendicular manner from the channel (22).

7. Device according to one of claims 1 to 6, characterised in that the metering pipe (30) is a metering nozzle with at least one radial transverse bore (32) close to the free end and open at both ends, the transverse bore possibly having a diameter (f) of 1 to 2.5 mm.

8. Device according to at least one of claims 1 to 7, characterised in that a recess (34) for receiving the swirl nozzle (36) extends from the blind bore (20) nearest to the air inlet (52) to the surface (15) of the supporting socket (16) and/or that a lateral arm (23) connected to the riser (44) departs in a substantially perpendicular manner from the blind bore (21) remote from the air inlet (52).

9. Device according to at least one of claims 1 to 8, characterised in that the free length (t) of the riser (44) is greater than ten times the free length (q) of the swirl nozzle (36) or metering pipe (30) and/or that the diameter (k) of the riser (44) corresponds to approximately half the free length (q) of the metering pipe (30).

10. Device according to at least one of claims 1 to 9, characterised in that the swirl nozzle (36) has a broad axial channel (38) of preferably 3 to 4 mm in diameter and is provided close to its free end with at least one approximately needle-sized nozzle hole (40), at least one filtering apparatus (42) possibly being arranged in the axial channel (38) of the swirl nozzle (36).

11. Device according to at least one of claims 1 to 10, characterised in that an end lateral hole (48) of the riser (44) and/or the nozzle hole (40) of the swirl nozzle (36) extends at an angle (w) relative to the transverse bore (32) of the metering nozzle (30), the angle (w) preferably being approximately 45°.

12. Device according to at least one of claims 2 to 11, characterised in that a hose connecting pipe (58) for the line (64) is inserted into the blind bore (21) remote from the air inlet (52) for control air and the hose connecting pipe is provided with an inlet (bore 70) for the working air, a screw-in component (71) possibly being inserted into the hose connecting pipe (58) and radially traversing the wall thereof, and a screw bush (74) with a screw cap (76) traversed by an air passage being arranged thereon.

13. Device according to at least one of claims 1 to 12, characterised in that at least one filter (25, 26, 27) is arranged in the air inlet (52; 77, 70), a screw-in component (71) possibly being inserted into the hose connecting pipe (58) and radially traversing the wall thereof, and a screw bush (74) with a screw cap (76) traversed by an air passage being arranged thereon.

14. Method for moving granular means for dental prosthesis treatment by means of a device according to at least one of the preceding claims, in which the granular material is mixed with compressed air and can be fed to the dental prosthesis in a mixed jet, characterised in that a stream of control air is fed to the granular means before it is mixed with the compressed air, and the means is fluidised together therewith.

## Revendications

1. Dispositif pour déplacer un adjuvant du type granulat pour le traitement d'une prothèse dentaire, selon lequel le granulat est mélangé à de l'air comprimé et peut être amené, sous la forme d'un jet de ce mélange, à ladite prothèse dentaire, tandis que, dans l'espace supérieur (9) d'un récipient (10) contenant le granulat (Q) pénètre au moins un tube ascendant (44) comportant au moins un trou (48) prévu dans l'espace supérieur (9), caractérisé en ce que le tube ascendant (44) est fixé sur un socle porteur (16) qui est traversé transversalement par un passage d'air (20, 21, 22, 24) auquel est raccordé ledit tube ascendant (44) et qu'un tube de dosage (30) débouchant dans ledit passage et pénétrant dans le récipient (10) divise en une zone d'arrivée d'air et une zone d'évacuation d'air, la zone d'arrivée d'air présentant une buse à turbulence (36) pénétrant dans ledit récipient (10).

2. Dispositif pour déplacer un adjuvant du type granulat pour le traitement d'une prothèse dentaire, selon lequel le granulat est mélangé à de l'air comprimé et peut être amené, sous la forme d'un jet de ce mélange, à ladite prothèse dentaire, tandis que, dans l'espace supérieur (9) d'un récipient (10) contenant le granulat (Q) pénètre au moins un tube ascendant (44) comportant au moins un trou (48) prévu dans l'espace supérieur (9), caractérisé en ce que le tube ascendant (44) raccordé à un passage d'air est fixé sur un socle porteur (16) qui présente un tube de dosage (30) pénétrant dans le récipient (10) et raccordé à une conduite d'air (21, 22), dans laquelle débouche, après le tube de dosage (30) dans le sens de l'écoulement, un canal d'amenée (70) pour l'air de transport, tandis qu'une buse à turbulence (36) raccordée à une canalisation d'alimentation en air (20, 24) et pénétrant dans le récipient (10), fait saillie du socle porteur (16).

3. Dispositif selon la revendication 1 ou 2, caractérisé en ce que le tube ascendant (44) est raccordé à la conduite d'air (21) après le tube de dosage (30) dans le sens de l'écoulement.

4. Dispositif selon l'une des revendications 1 à 3, caractérisé en ce que le passage d'air (20, 21, 22, 24) se rétrécit par paliers en direction de l'axe médian (A) du récipient.

5. Dispositif selon l'une des revendications 1 à 4, caractérisé par la présence de deux trous borgnes (20, 21) situés à l'extérieur, dont celui situé le plus près de l'entrée d'air (52) est raccordé, par un perçage étroit (24), à un canal coaxial (22) de diamètre supérieur (n) qui part du fond de l'autre trou borgne (21).

6. Dispositif selon l'une des revendications 1 à 5, caractérisé en ce que du canal (22) part sensiblement à angle droit une cavité (17) recevant le tube de dosage (30).

7. Dispositif selon l'une des revendications 1 à 6, caractérisé en ce que le tube de dosage (30) est une buse de dosage comportant au moins un perçage transversal radial (32) proche de l'extrémité libre et ouvert sur les deux extrémités, le diamètre (f) de ce perçage transversal étant éventuellement compris entre 1 et 2,5 mm.

8. Dispositif selon au moins l'une des revendications 1 à 7, caractérisé en ce qu'entre le trou borgne (20) le plus proche de l'entrée d'air (52) et la face (15) du socle porteur (16) s'étend un évidement (34) destiné à recevoir la buse à turbulence (36), et/ou en ce que du trou borgne (21) éloigné de l'entrée d'air (52) part, sensiblement à angle droit, un bras latéral (23) faisant suite au tube ascendant (44).

9. Dispositif selon au moins l'une des revendications 1 à 8, caractérisé en ce que la longueur libre (t) du tube ascendant (44) est supérieure à dix fois la longueur libre (q) de la buse à turbulence (36) ou du tube de dosage (30), et/ou en ce que le diamètre (k) du tube ascendant (44) correspond sensiblement à la moitié de la longueur libre (q) du tube de dosage (30).

10. Dispositif selon au moins l'une des revendications 1 à 9, caractérisé en ce que la buse à turbulence (36) présente un large canal axial (38), de préférence de 3 à 4 mm de diamètre, et est munie, à proximité de son extrémité libre, d'au moins un trou de buse (40) sensiblement de l'épaisseur d'une aiguille, tandis que, éventuellement, dans le canal axial (38) de la buse à turbulence (36) est disposé au moins un dispositif de filtrage (42).

11. Dispositif selon au moins l'une des revendications 1 à 10, caractérisé en ce qu'un trou latéral (48) de l'extrémité du tube ascendant (44) et/ou le trou de buse (40) de la buse à turbulence (36) s'étend ou s'étendent en formant un angle (w) avec le perçage transversal (32) de la buse de dosage (30), cet angle (w) étant, de préférence, de 45° environ.

12. Dispositif selon au moins l'une des revendications 2 à 11, caractérisé en ce que, dans le trou borgne (21) éloigné de l'entrée d'air (52) de l'air de commande, est monté un tube (58) de raccordement à un tuyau pour l'évacuation (64) et en ce que ce tube de raccordement est muni d'une entrée (perçage 70) pour l'air moteur, tandis que, éventuellement, est inséré radialement dans le tube de raccordement (58) un élément (71) pouvant être vissé et traversant la paroi de ce tube et que, sur cet élément, est disposée une douille filetée (74) munie d'un capuchon fileté (76) traversé par l'air.

13. Dispositif selon au moins l'une des revendications 1 à 12, caractérisé en ce que, dans l'entrée d'air (52 ; 77, 70), est disposé au moins un filtre (25, 26, 27), tandis que, éventuellement, dans le tube de raccordement (58) est inséré radialement un élément (71) pouvant être vissé et traversant la paroi dudit tube (58) et que, sur cet élément (71), est disposée une douille filetée (74) comportant un capuchon fileté (76) traversé par l'air.

14. Procédé pour déplacer un adjuvant du type granulat pour le traitement d'une prothèse dentaire, au moyen d'un dispositif dans au moins l'une des revendications précédentes, selon lequel le granulat est mélangé à de l'air comprimé et amené à la prothèse en un jet de ce mélange, caractérisé en ce qu'on amène à l'adjuvant du type granulat, avant son mélange avec l'air comprimé, un flux d'air moteur, et on fluidise ledit adjuvant au moyen de cet air.
